Europäisches Patentamt

European Patent Office

Office européen des brevets

(11) Publication number: **0 132 142**
**B1**

(12) **EUROPEAN PATENT SPECIFICATION**

(45) Date of publication of patent specification: **08.07.87**

(51) Int. Cl.⁴: **C 09 H 9/04,** C 09 H 7/00,
C 08 J 3/10

(21) Application number: **84304814.1**

(22) Date of filing: **13.07.84**

(54) **Production of gelatin spherical gels.**

(30) Priority: **14.07.83 JP 128463/83**

(43) Date of publication of application:
**23.01.85 Bulletin 85/04**

(45) Publication of the grant of the patent:
**08.07.87 Bulletin 87/28**

(84) Designated Contracting States:
**CH DE FR GB LI**

(56) References cited:
**DE-A-1 445 105**
**DE-C- 813 188**
**FR-A-2 271 270**

(73) Proprietor: **Hitachi Chemical Co., Ltd.**
**1-1, Nishi-shinjuku 2-chome Shinjuku-ku**
**Tokyo 160 (JP)**

(72) Inventor: **Hirai, Osamu**
**Yamazakiryo, 2-9**
**Higashicho-4-chome Hitachi-shi (JP)**
Inventor: **Mukoyama, Yoshiyuki**
**20-5, Nishinarusawacho-3-chome**
**Hitachi-shi (JP)**

(74) Representative: **Goldin, Douglas Michael et al**
**J.A. KEMP & CO. 14, South Square Gray's Inn**
**London WC1R 5EU (GB)**

Courier Press, Leamington Spa, England.

## Description

This invention relates to a process for producing gelatin spherical gels, and more particularly to a process for producing polypeptide spherical gels suitable for an embolic agent or a carrier for impregnating pharmaceuticals.

In recent years, studies on embolization of arteriae, selective intra-arterial injection of drugs, and the like have been made extensively in the field of radiology. These studies have their objects to conduct embolization on a trophic arteria having neoplasm as pre-treatment of surgical removal of the neoplasm so as to reduce the bleeding amount during operation, or to reduce the neoplasm by closure of tropic arteria or by selective injection of pharmaceuticals from tropic arteria in the case of carcinomatous neoplasm when radical operation is impossible.

On the other hand, embolic agents can be divided into two groups depending on purposes, that is, those having ephemeral embolism or having solubility and those having permanent embolism or having insolubility. As embolic agents for such purposes, there are used those obtained in dissolving gelatin in water, foaming, subjecting to lyophilization to form spongy body and cutting into several millimeters at a side or powdered; those obtained by adding formaldehyde to gelatin, conducting polymerization with heating, blowing air bubbles thereinto to form spongy body and cutting into several millimeters at a side or powered; or the like. In the case of selective injection of pharmaceuticals, these substances are impregnated with pharmaceuticals before use. But since these substances are in broken form, they have a defect in that they are difficult to adhere to blood vessels compared with spherical ones.

As spherical substances available commercially, there are known those made from organic polymers such as polystyrenes, poly(acrylic acid ester)s, polyvinyl alcohols, those made from inorganic substances such as silica, glass, etc. But these substances have a problem from the viewpoint of safety when they are included in a living body.

It is an object of this invention to provide a process for producing spherical substances usable as embolic agent, etc., overcoming the problem mentioned above.

This invention provides a process for producing gelatin spherical gels which comprises dispersing an aqueous solution of gelatin in a dispersing medium obtained by dissolving water-insoluble ethyl cellulose in a non-polar alicyclic hydrocarbon solvent which is not miscible with water, and removing the water by distillation.

Gelatin has various molecular weights depending on raw materials used. In this invention, there is no particular limit to the molecular weight.

The concentration of gelatin in an aqueous solution of gelatin is preferably 5% by weight or more and the saturated concentration or lower. When the gelatin concentration is too low, the productivity is lowered.

In a dispersing medium, an aqueous solution of gelatin and one or more crosslinking agents, if desired, may be dispersed and subjected to a crosslinking reaction. This can be conducted by adding the aqueous solution of gelatin and crosslinking agent dissolved in water to a liquid which is immiscible in water and stirring the resulting mixture. But since, the gelatin easily reacts with the crosslinking agent, it is preferable to disperse an aqueous solution of gelatin in the liquid immiscible with water, followed by addition of the crosslinking agent or an aqueous solution thereof thereto.

Gelatin has functional groups such as $-NH_2$, $-OH$ and $-COOH$ which become reactive sites at the crosslinking reaction.

As the crosslinking agent, there can be used a water-soluble compound which can conduct a crosslinking reaction with gelatin. Examples of the crosslinking agent having reactivity with the functional groups (e.g. $-NH_2$ group, $-COOH$ group) of gelatin are aliphatic dials such as glyoxal, propanedial, butanedial, pentanedial (glutaraldehyde), hexanedial; water-soluble polyvalent epoxides such as ethylene glycol diglycidyl ether, polyethylene glycol diglycidyl ether, glycerol polyglycidyl ether, diglycerol polyglycidyl ether, sorbitol polyglycidyl ether, diglycidyl methylhydantion.

In general, when the amount of crosslinking agent is less that 5/100 equivalent weight per equivalent weight of reactive functional groups of gelatin (such as $-NH_2$, $-COOH$), the crosslinking becomes insufficient to maintain the gelatin particles in spherical form. Even in such a case, when the water is removed by distillation according to this invention, the resulting gelatin particles can remain in the spherical form. If the water is not removed by distillation, the resulting particles are easily paste-likely agglomerated after the separation and washing of the particles with water. As the crosslinking agent, it is preferable to use those which do not react with ethyl cellulose.

The dispersing medium usable in this invention is a non-polar alicyclic hydrocarbon solvent which is not miscible with water, can dissolve the water-insoluble ethyl cellulose, and can form an azeotropic mixture with water or has a higher boiling point than water. The non-polar solvent can be used together with one or more polar solvents such as esters, ketones, halogenated alkanes, ethers, alcohols or aromatic hydrocarbons, these being unreactive with the crosslinking agent.

Preferably examples of the alicyclic hydrocarbons are those having 5 to 10 carbon atoms or alkyl substituted alicyclic hydrocarbons such as cyclopentane, cyclohexane, cycloheptane, methylcyclohexane, cyclooctane, decalin, etc. These alicyclic hydrocarbons can be used alone or as a mixture thereof.

The aromatic hydrocarbons include aromatic hydrocarbons and halogen substituted aromatic hydrocarbons having 6 to 8 carbon atoms. Examples of these aromatic hydrocarbons are benzene, toluene, xylenes, ethylbenzene, chlorobenzene, dichlorobenzene, bromobenzene, dibromobenzene, etc. These aromatic hydrocarbons can be used alone or as a mixture thereof.

As the esters, there can be preferably be used those obtained from fatty acids with 1 to 8 carbon atoms or aromatic carboxylic acids with 7 to 8 carbon atoms and alcanols having 1 to 8 carbons, alone or as a mixture thereof. Examples of the esters are methyl acetate, ethyl acetate, n-butyl acetate, benzyl acetate, methoxyethyl acetate, methyl caproate, methyl benzoate, diethyl phthalate.

As the ketones, there can preferably be used aliphatic ketones having 5 to 8 carbon atoms, and aromatic ketones having 8 to 13 carbon atoms, alone or as a mixture thereof. Examples of the ketones are methyl isobutyl ketone, cyclohexanone, methyl amyl ketone, hexyl methyl ketone, acetophenone, benzophenone.

As the halogenated alkanes, there can preferably be used alkanes having 1 to 4 substituted halogens alone or as a mixture thereof. Examples of the halogenated alkanes are methylene chloride, carbon tetrachloride, 1,2-dichloroethane, 1,1,2-trichloroethane, pentachloroethane, 1,2-dichloropropane, 1,2-dichlorbutane, 1,2-dibromoethane.

As the ethers, there can preferably be used straight-chain or cyclic ethers having 4 to 8 carbon atoms alone or as a mixture thereof. Examples of the ethers are di-n-propyl ether, di-n-butyl ether, tetrahydrofuran, dioxane, diethylene glycol dimethyl ether.

As the alcohols, there can preferably be used alkanols having 4 to 8 carbon atoms or alkoxy alkanols having 4 to 8 carbon atoms alone or as a mixture thereof. Examples of the alcohols are n-butanol, n-octanol, methoxy-ethanol, ethoxyethanol, butoxyethanol, diethylene glycol monomethyl ether.

As the water-insoluble ethyl cellulose, there can be used those having an ethoxy group content of 43 to 50%. The words "ethoxy group content" mean a weight percent of the ethoxy group in ethyl cellulose. Among those mentioned above, those having relatively smaller ethoxy group content, for example, those having 43 to 46% by weight of the ethoxy group content, are hardly soluble in the above-mentioned non-polar alicyclic hydrocarbon solvent. Therefore, when the above-mentioned non-polar alicyclic hydrocarbon solvent is used alone as the dispersing medium, it is preferable to use those having 47 to 50% by weight of the ethoxy group content.

When the water-insoluble ethyl cellulose is used in combination with one or more above-mentioned non-polar alicyclic hydrocarbon solvents there can be formed a particularly preferable dispersing medium. But since the solubility of ethyl cellulose in a non-polar organic solvent is poor as mentioned above, it is preferable to use the above-mentioned polar solvent or aromatic hydrocarbon together as dispersing medium.

When a mixture of non-polar alicyclic hydrocarbon solvent and at least one aromatic hydrocarbon is used as dispersing medium, the aromatic hydrocarbon can be used in an amount of preferably 400% by weight or less, more preferably 200% by weight or less based on the weight of the non-polar alicyclic hydrocarbon solvent.

When a mixture of non-polar alicyclic hydrocarbon solvent and at least one of the esters, ketones and halogenated alkanes is used as dispersing medium, the latter component can be used in an amount of preferably 200% by weight or less, more preferaly 150% by weight or less, based on the weight of the non-polar alicyclic hydrocarbon solvent.

When a mixture of non-polar alicyclic hydrocarbon solvent and at least one of the ethers and alcohols is used as dispersing medium, the latter component can be used in an amount of preferably 30% by weight or less, more preferably 20% by weight or less, based on the weight of the non-polar alicyclic hydrocarbon solvent.

When the aromatic hydrocarbons, ketones, esters, halogenated alkanes, ethers, alcohols are used together with the non-polar organic solvent in amounts larger than the values mentioned above, there is a tendency not to provide a good dispersing medium.

The water-insoluble ethyl cellulose can be used in an amount of preferably 0.05 to 10% by weight, more preferably 0.5 to 5% by weight, based on the total of the dispersing medium.

The dispersing medium used in this invention obtained by dissolving the water-insoluble ethyl cellulose in the water-immiscible organic dispersing medium can disperse non-crosslinked gelatin effectively.

It is preferable to use the dispersing medium in an amount of preferably 50 to 2000% by weight, more preferably 100 to 1000% by weight, based on the total weight of gelatin, the crosslinking agent and water (hereinafter referred to as "the amount of water phase"). When the amount of the dispersing medium is too much, the productivity becomes poor, while when the amount of the dispersing medium is too small, the stability of dispersing medium becomes poor.

In order to disperse the aqueous solution of gelatin in the dispersing medium, there can be employed a method of mixing the two with stirring, a method of adding the aqueous solution of gelatin to the dispersing medium with stirring. As the stirring method, there can be employed a stirring method by using an emulsator accompanying high-speed shearing, a stirring method by using a marine propeller stirrer or magnetic stirrer not accompanying mechanical cutting or grinding. These stirring methods can be selected depending on the desired particle size.

It is preferable to conduct the dispersion of the aqueous solution of gelatin at a temperature from room temperature to the boiling point of water or the dispersing medium. After the completion of dispersion, the water is removed by distillation at elevated temperatures or under reduced pressure.

After removal of the water by distillation, the resulting gelatin spherical particles can be recovered by filtration or decantation. The solvent which forms an azeotropic mixture with water can be removed by distillation together with the distillation of water. In such a case, when the amount of dispersing medium becomes too small, such a solvent can be supplemented during the distillation. When the washing of the resulting particles is conducted by using a solvent having a relatively low boiling point and the drying is conducted under atmospheric or reduced pressure, the particles can be purified while maintaining the spherical form.

If a very limited range of particle size is required, a conventional classification can be employed.

This invention is illustrated by way of the following Examples and Comparative Example.

Example 1

In a dispersing medium comprising 150g of decalin and 50 g of toluene, 6 g of ethyl cellulose (the ethoxy group content: 49% by weight) was dissolved. The resulting dispersing medium was introduced into a 500-ml flask equipped with a cooling tube and agitating blades made from polytetrafluoroethylene. The stirring speed was controlled at 400 r.p.m. and the temperature was raised to 70°C. Then, 40 g of a 30% by weight aqueous solution of gelatin dissolved at 50°C was added to the flask, wherein the stirring was continued for 5 minutes to produce spherical particles. Then, the temperature was raised to 110°C to remove the water by distillation. The resulting particles were collected by filtration, washed with ethyl acetate, followed by washing with acetone. The particles had a spherical form and a particle size of 0.1 to 1 mm when observed by a microscope.

Example 2

In a dispersing medium of 200g of decalin, 6 g of ethyl cellulose (the ethoxy group content: 49% by weight) was dissolved. The resulting dispersing medium was introduced into a 500-ml flask equipped with a cooling tube and agitating blades made from polytetrafluoroethylene. The stirring speed was controlled at 400 r.p.m. and the temperature was raised to 70°C. Then, 40 g of a 30% by weight aqueous solution of gelatin dissolved at 50°C was added to the flask, wherein the stirring was continued for 5 minutes to produce spherical particles. Then, the temperature was raised to 110°C to remove the water by distillation. The resulting particles were collected by filtration, washed with ethyl acetate, followed by washing with acetone. The particles had a spherical form and had a particle size of 0.1 to 1 mm when observed by a microscope.

Example 3

In a dispersing medium comprising 150g of decalin and 50 g of toluene, 6 g of ethyl cellulose (the ethoxy group content: 49% by weight) was dissolved. The resulting dispersing medium was introduced into a 500-ml flask equipped with a cooling tube and agitating blades made from polytetrafluoroethylene. The stirring speed was controlled at 400 r.p.m. and the temperature was raised to 70°C. Then, 40 g of a 30% by weight aqueous solution of gelatin dissolved at 50°C was added to the flask, and 0.9 g of a 5% by weight aqueous olution of glutaraldehyde (9/200 equivalent weight of glutaraldehyde per equivalent weight of the amino group of gelatin) was also added to the flask, wherein the stirring was continued for 5 minutes to produce spherical particles. Then, the temperature was raised to 110°C to remove the water by distillation. The resulting particles were collected by filtration, washed with ethyl acetate, followed by washing with acetone. The particles had a spherical form and a particle size of 0.1 to 1 mm when observed by a microscope.

Comparative Example 1

In a dispersing medium comprising 150g of decalin and 50 g of ethyl cellulose (the ethoxy group content: 49% by weight) was dissolved. The resulting dispersing medium was introduced into a 500-ml flask equipped with a cooling tube and agitating blades made from polytetrafluoroethylene. The stirring speed was controlled at 400 r.p.m. and the temperature was raised to 70°C. Then, 40 g of a 30% by weight aqueous solution of gelatin dissolved at 50°C was added to the flask, wherein the stirring was continued for 5 minutes to produce spherical particles. Then, the particles were collected by filtration without removal of the water by distillation, washed with ethyl acetate, followed by washing with acetone. The resulting particles were agglomerated to form a paste-like solid.

As mentioned above, this invention can provide safe gelatin spherical particles.

**Claims**

1. A process for producing gelatin spherical gels which comprises dispersing an aqueous solution of gelatin in a dispersing medium obtained by dissolving water-insoluble ethyl cellulose in a nonpolar alicyclic hydrocarbon solvent which is not miscible with water, and removing water by distillation.

2. A process according to claim 1 wherein the alicyclic hydrocarbon is at least one member selected from the group consisting of cyclopentane, cyclohexane, cycloheptane, methylcyclohexane, cyclooctane and decalin.

3. A process according to claim 1 or claim 2, wherein the alicyclic hydrocarbon is used together with at least one polar solvent or an aromatic hydrocarbon.

4. A process according to claim 3, wherein the polar solvent is an ester, a ketone, a halogenated alkane, an ether or an alcohol.

5. A process according to claim 3, wherein the aromatic hydrocarbon is benzene, toluene, xylene, ethylbenzene, chlorobenzene, dichlorobenzene, bromobenzene or dibromobenzene.

6. A process according to any preceding claim, wherein the water-insoluble ethyl cellulose has the ethoxy group content of 43 to 50% by weight.

7. A process according to any preceding claim, wherein the aqueous solution of gelatin has a concentration of 5% by weight or more.

8. A process according to any preceding claim, wherein the aqueous solution of gelatin further contains a crosslinking agent.

9. A process according to claim 8, wherein the crosslinking agent is an aliphatic dial or a water-soluble polyvalent epoxide.

**Patentansprüche**

1. Verfahren zur Herstellung von kugelförmigen Gelatingelen, dadurch gekennzeichnet, daß man eine wäßrige Lösung von Gelatine in einem Dispergierungsmedium, erhalten durch Auflösen von wasserunlöslicher Ethylcellulose in einem mit Wasser nicht mischbaren nichtpolaren alicyclischen Kohlenwasserstoff-Lössungsmittel, dispergiert und daß man Wasser durch Destillation entfernt.

2. Verfahren nach Anspruch 1, dadurch gekennzeichnet, daß man als alicyclischen Kohlenwasserstoff mindestens eine Substanz, ausgewählt aus der Gruppe bestehend aus Cyclopentan, Cyclohexan, Cycloheptan, Methylcyclohexan, Cyclooctan und Decalin, verwendet.

3. Verfahren nach Anspruch 1 oder 2, dadurch gekennzeichnet, daß man den alicyclischen Kohlenwasserstoff zusammen mit mindestens einem polaren Lösungsmittel oder einem aromatischen Kohlenwasserstoff verwendet.

4. Verfahren nach Anspruch 3, dadurch gekennzeichnet, daß das polare Lösungsmittel ein Ester, ein Keton, ein halogeniertes Alkan, ein Ether oder ein Alkohol ist.

5. Verfahren nach Anspruch 3, dadurch gekennzeichnet, daß der aromatische Kohlenwasserstoff Benzol, Toluol, Xylol, Ethylbenzol, Chlorbenzol, Dichlorbenzol, Brombenzol oder Dibrombenzol ist.

6. Verfahren nach einem vorstehenden Anspruch, dadurch gekennzeichnet, daß die wasserunlösliche Ethylcellulose einen Ethoxygruppengehalt von 43 bis 50 Gew.-% hat.

7. Verfahren nach einem vorstehenden Anspruch, dadurch gekennzeichnet, daß die wäßrige Lösung von Gelatine eine Konzentration von 5 Gew.-% oder mehr hat.

8. Verfahren nach einem vorstehenden Anspruch, dadurch gekennzeichnet, daß die wäßrige Lösung von Gelatine weiterhin ein Vernetzungsmittel enthält

9. Verfahren nach Anspruch 8, dadurch gekennzeichnet, daß das Vernetzungsmittel ein aliphatisches Dial oder ein wasserlösliches mehrwertiges Epoxid ist.

**Revendications**

1. Procédé de production de gels sphériques de gélatine, qui comporte la dispersion d'une solution aqueuse de gélatine dans un milieu de dispersion qu'on obtient en dissolvant de l'éthylcellulose insoluble dans l'eau dans un solvant hydrocarboné alicyclique non polaire qui n'est pas miscible à l'eau, et l'élimination de l'eau par distillation.

2. Procédé selon la revendication 1, dans lequel l'hydrocarbure alicyclique est au moins un membre du groupe comprenant le cyclopentane, le cyclohexane, le cycloheptane, le méthylcyclohexane, le cyclooctane et la décaline.

3. Procédé selon la revendication 1 ou 2, dans lequel on utilise l'hydrocarbure alicyclique conjointement avec au moins un solvant polaire ou un hydrocarbure aromatique.

4. Procédé selon la revendication 3, dans lequel le solvant polaire est un ester, une cétone, un alcane halogéné, un éther ou un alcool.

5. Procédé selon la revendication 3, dans lequel l'hydrocarbure aromatique est le benzène, le toluène, le xylène, l'éthylbenzène, le chlorobenzène, le dichlorobenzène, le bromobenzène ou le dibromobenzène.

6. Procédé selon l'une quelconque des revendications précédentes, dans lequel l'éthylcellulose insoluble dans l'eau a une teneur en groupes éthoxy de 43 à 50% en poids.

7. Procédé selon l'une quelconque des revendications précédentes, dans lequel la solution aqeuese de gélatine présente une concentration de 5% en poids ou plus.

8. Procédé selon l'une quelconque des revendications précédentes, dans lequel la solution aqueuse de gélatine contient également un agent de réticulation.

9. Procédé selon la revendication 8, dans lequel l'agent de réticulation est un dialdéhyde aliphatique ou un polyépoxide soluble dans l'eau.